# EUROPÄISCHE PATENTSCHRIFT

(11) **EP 1 295 192 B1**
(45) Veröffentlichungstag und Bekanntmachung des Hinweises auf die Patenterteilung: **25.08.2004**
(21) Anmeldenummer: 01965007.6
(22) Anmeldetag: 20.06.2001
(51) Int. Cl.: G05D 16/20

(54) **HYDRAULISCH GESTEUERTES DRUCKENTLASTUNGSVENTIL FÜR HOCHDRUCKREAKTOREN**
HYDRAULICALLY CONTROLLED PRESSURE RELIEF VALVE FOR HIGH-PRESSURE REACTORS
SOUPAPE DE DECHARGE A COMMANDE HYDRAULIQUE POUR REACTEURS HAUTE PRESSION

(30) Priorität: 29.06.2000 DE 10031586
(43) Veröffentlichungstag der Anmeldung: 26.03.2003
(73) Patentinhaber: Basell Polyolefine GmbH, 50389 Wesseling (DE)
(72) Erfinder: HAMMER, Klaus, 67112 Mutterstadt (DE); GROOS, Georg, 67125 Dannstadt-Schauernheim (DE)
(86) Internationale Anmeldenummer: PCT/EP2001/006933
(87) Internationale Veröffentlichungsnummer: WO 2002/001308

(56) Entgegenhaltungen:
- EP-A- 0 540 915
- US-A- 5 026 527
- US-A- 5 533 551

## Beschreibung

Die Erfindung betrifft eine Vorrichtung, die einen ein hydraulisch gesteuertes Druckentlastungsventil aufweisenden Hochdruckreaktor enthält.

Hochdruck-Polyethylen weist im Vergleich zu Nieder- und Mitteldruck-Polyethylen einen höheren Verzweigungsgrad, einen niedrigeren kristallinen Anteil, einen niedrigeren Schmelzbereich und eine niedrigere Dichte auf. Bei dem Hochdruckverfahren wird Ethen radikalisch bei Temperaturen zwischen ca. 150 und 300°C in einem Druckbereich von ca. 1500 bis 4000 bar polymerisiert. Als radikalischer Initiator werden meist Sauerstoff oder geringe Mengen von Peroxiden zugesetzt. Der entsprechende Reaktor kann als Rührreaktor oder bevorzugt als Strömungsrohr ausgebildet sein. Ein geeigneter Rohrreaktor ist normalerweise mehrere hundert bis einige tausend Meter lang und von außen mit einem Heiz- bzw. Kühlmantel umgeben. Aufgrund des hohen Innendrucks in dem Reaktor haben die aus Metall konstruierten Wände des Rohrreaktors typischerweise eine Stärke in der Größenordnung von einigen cm.

Verfahrenstechnische Probleme des Hochdruckverfahrens werden in "Chem.-Ing.-Tech. 67 (1995) Nr. 7, Seiten 862 bis 864, Verlag VCH-Verlagsgesellschaft GmbH Weinheim" erläutert. So wird aufgeführt, dass Ethen unter bestimmten Temperatur- und Druckbedingungen explosionsartig rasch zu Ruß, Methan und Wasserstoff zerfällt. Diese unerwünschte Reaktion tritt besonders bei der Hochdruckpolymerisation des Ethens immer wieder auf. Der damit verbundene drastische Druck- und Temperaturanstieg stellt ein erhebliches Gefahrenpotential für die Betriebssicherheit der Produktionsanlagen dar.

Eine Lösungsmöglichkeit zur Verhinderung eines solchen drastischen Druck- und Temperaturanstiegs besteht im Einbau von Berstscheiben in den Rohrreaktor. Der Nachteil solcher Berstscheiben ist allerdings, dass diese bei den vorhandenen hohen Drücken nicht auf verhältnismäßig geringe Druckschwankungen reagieren - das heißt, Berstscheiben können unerwünschterweise in der Nähe der üblichen Betriebsdrücke bersten. Ein weiterer wesentlicher Nachteil von Berstscheiben ist, dass diese nicht auf Temperaturerhöhungen ansprechen. Als Alternative zu Berstscheiben können sogenannte T-Notventile (Druckentlastungsventile) eingesetzt werden. Solche Druckentlastungsventile werden durch einen hydraulischen Steuerungsmechanismus geöffnet bzw. geschlossen. Da ein solcher hydraulischer Steuerungsmechanismus verhältnismäßig träge ist, ergeben sich entsprechend niedrige Öffnungsgeschwindigkeiten für die entsprechenden Druckentlastungsventile.

Die Aufgabe der vorliegenden Erfindung ist somit die Bereitstellung eines Hochdruckreaktors, in dem das Auftreten von sprunghaften Druck- oder Temperaturanstiegen eine besonders schnelle Entlastung (Entspannung bzw. Temperaturerniedrigung) bewirkt. Die Entlastung des Reaktors soll zuverlässig und mit einer hinreichend hohen Geschwindigkeit erfolgen.

Die Lösung dieser Aufgabe ist dann eine Vorrichtung enthaltend
a) einen Hochdruckreaktor, aufweisend ein Innenvolumen von 0,4 bis 20 m³ und einen Innendruck von 1000 bis 5000 bar,
b) Messeinrichtungen zur Bestimmung von Druck und/oder Temperatur in dem Hochdruckreaktor,
c) eine elektronische Steuerung,
d) eine ein oder mehrere Ventile aufweisende hydraulische Steuereinheit,
e) ein Hydraulikaggregat, enthaltend eine bewegliche Kolbenmasse aufweisenden Hydraulikzylinder und ein an dem Hochdruckreaktor befindliches, durch den Hydraulikzylinder gesteuertes Druckentlastungsventil und
f) für die Beförderung von Hydraulikflüssigkeit vorgesehene Verbindungsleitungen zwischen der hydraulischen Steuereinheit und dem Hydraulikaggregat, wobei
bei Überschreitung einer vorgegebenen Temperatur oder eines vorgegebenen Drucks in dem Hochdruckreaktor durch eine Messeinrichtung ein Signal an die elektronische Steuerung übermittelt wird, welche darauf die Öffnung eines oder mehrerer Ventile der hydraulischen Steuereinheit veranlasst, wodurch Hydraulikflüssigkeit durch ein oder mehrere Verbindungsleitungen in Richtung der beweglichen Kolbenmasse des Hydraulikzylinders gepresst wird, die bewegliche Kolbenmasse dadurch bewegt wird, wobei mindestens eine der Verbindungsleitungen im Durchschnitt einen Innendurchmesser von 10 bis 80 mm aufweist, diese mindestens eine Verbindungsleitung einen Innendruck von 100 bis 500 bar aufweist und die bewegliche Kolbenmasse 10 bis 80 kg wiegt.

Der Hochdruckreaktor ist in der Regel als Rohrreaktor ausgebildet, kann jedoch auch als Hochdruckautoklav ausgestaltet sein. Meist wird der Hochdruckreaktor für Herstellung von Ethylenpolymerisaten eingesetzt. Als Messeinrichtungen für die Bestimmung der Temperatur oder des Drucks eignen sich handelsübliche Sensoren. Unter der beweglichen Kolbenmasse soll der Teil des Hydraulikzylinders verstanden werden, der beim Schließen bzw. Öffnen des Druckentlastungsventils durch die Hydraulikflüssigkeit bewegt wird. Meist weist die bewegliche Kolbenmasse den Hydraulikkolben und eine entsprechende Ventilspindel auf. Die für die Beförderung von Hydraulikflüssigkeit vorgesehenen Verbindungsleitungen sind bevorzugt als Rohre ausgebildet.

Der wesentliche Vorteil der vorliegenden Erfindung ist, dass Drucksprünge in dem Hochdruckreaktor schlagartig entspannt werden können. Die Größenordnung des entsprechenden Öffnungsvorgangs für das Druckentlastungsventil beträgt nur ca. 50 ms. Dies ist im Gegensatz zu bekannten Druckentlastungssystemen hinreichend schnell für eine zuverlässige Entlastung (Entspannung bzw. Temperaturemiedrigung) des Hochdruckreaktors. Ein weiterer wesentlicher Vorteil der Erfindung ist, dass die Druckentlastung sowohl durch Druck- als auch durch Temperatursprünge ausgelöst werden kann.

Die schnelle und zuverlässige Entlastung des Reaktors wird u.a. auch dadurch erreicht, dass die Druckentlastungsventile einen Sitzquerschnitt erhalten, der in der Regel mindestens ca. 350 mm² pro m³ Reaktorvolumen beträgt. In den Temperaturmaxima des Reaktors sollten möglichst bis 800 mm² Sitzquerschnitt pro m³ Reaktorvolumen realisiert sein.

Das Innenvolumen des Hochdruckreaktors beträgt meist 1 bis 15 m³. Als bevorzugter Innendruck des Hochdruckreaktors kommen 2000 bis 3500 bar in Frage.

Meist weist mindestens eine Verbindungsleitung zwischen der hydraulischen Steuereinheit und dem Hydraulikaggregat im Durchschnitt einen Innendurchmesser von 20 bis 50 mm auf ― bevorzugt weisen alle zwischen der hydraulischen Steuereinheit und dem Hydraulikaggregat befindlichen Verbindungsleitungen im Durchschnitt einen Innendurchmesser von 20 bis 50 mm auf. Die mindestens eine Verbindungsleitung weist in der Regel einen Innendruck von 150 bis 250 bar auf - meist weisen alle zwischen der hydraulischen Steuereinheit und dem Hydraulikaggregat befindlichen Verbindungsleitungen einen Innendruck von 150 bis 250 bar auf. In einer bevorzugten Ausführungsform der Erfindung sind zwei für die Beförderung von Hydraulikflüssigkeit vorgesehene Verbindungsleitungen zwischen der hydraulischen Steuereinheit und dem Hydraulikaggregat angeordnet.

Eine dieser Verbindungsleitungen führt Hydraulikflüssigkeit zur hydraulischen Steuereinheit, die entsprechend andere von der hydraulischen Steuereinheit zum Hydraulikaggregat.

Die bewegliche Kolbenmasse wiegt bevorzugt 15 bis 50 kg.

In einer bevorzugten Ausführungsform der Erfindung ist eine Verbindungsleitung, bzw. die Verbindungsleitung durch die während des Öffnens des Druckentlastungsventils Hydraulikflüssigkeit von dem Hydraulikaggregat in Richtung der hydraulischen Steuereinheit befördert wird, mit einem Drosselrückschlagventil ausgestattet. Das Drosselrückschlagventil kann den Nachteil ausschließen, dass beim Schließvorgang des Druckentlastungsventils die entsprechende Ventilsitzgarnitur beschädigt wird. Durch den Einbau des Drosselrückschlagventils ist die Geschwindigkeit des Schließvorgangs einstellbar - in der Regel bewährt sich eine Schließzeit von ca. 2 s. Somit ermöglicht das Drosselrückschlagventil ein schnelles Öffnen und ein verzögertes Schließen des Druckentlastungsventils, wodurch hohe Standzeiten des "Druckentlastungssystems" gefördert werden.

In der Regel sind ein oder mehrere Ventile der hydraulischen Steuereinheit als Schieberventile mit Kugelsitzansteuerung ausgebildet.

Bevorzugt wird das Druckentlastungsventil dadurch geöffnet, dass die bewegliche Kolbenmasse entweder zum Druckentlastungsventil hin - oder bevorzugt vom letzteren wegbewegt wird.

Die anliegende Zeichnung zeigt
- in Figur 1: ein Schema der erfindungsgemäßen Vorrichtung,
- in Figur 2: ein Schema zur Verdeutlichung der Funktionsweise der hydraulischen Steuereinheit in Kombination mit dem Hydraulikaggregat - Zustand bei geschlossenem Druckentlastungsventil und
- in Figur 3: ein Funktionsschema der hydraulischen Steuereinheit in Kombination mit dem Hydraulikaggregat - bei geöffnetem Druckentlastungsventil ("Notstellung").

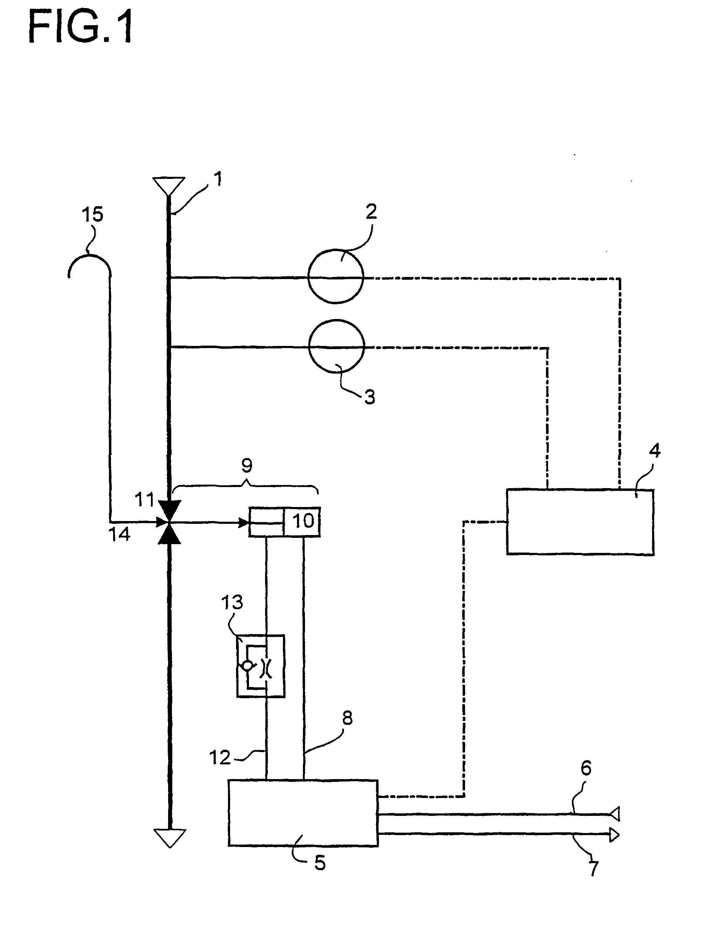

In Fig. 1 ist ein Hochdruckreaktor 1, an dem eine Messeinrichtung 2 für den Druck sowie einem Messeinrichtung 3 für die Temperatur angeordnet sind, aufgezeigt. Von den Messeinrichtungen 2, 3 werden bei Überschreitung einer vorgegebenen Temperatur oder eines vorgegebenen Drucks ein elektronisches Signal an die elektronische Steuerung 4 übermittelt. Letztere übermittelt ein elektronisches Signal an die hydraulische Steuereinheit 5. An die hydraulische Steuereinheit ist ein Zuführrohr 6 und ein Rücklaufrohr 7 für Hydraulikflüssigkeit angeordnet. Als Hydraulikflüssigkeit eignet sich normalerweise handelsübliches Hydrauliköl. Das die hydraulische Steuereinheit 5 erreichende Signal veranlasst die Öffnung eines oder mehrere Ventile der hydraulischen Steuereinheit 5. Dadurch wird Hydraulikflüssigkeit durch die Verbindungsleitung 8, welche als Rohr ausgebildet ist, in Richtung des Hydraulikaggregats 9 gepresst. Dadurch wird die bewegliche Kolbenmasse 10 bewegt, wodurch das Druckentlastungsventil 11 geöffnet wird. Zur Schließung des Druckentlastungsventils 11 wird über die Verbindungsleitung 12, welche als Rohr ausgebildet ist, über das Drosselrückschlagventil 13 Hydraulikflüssigkeit in Richtung des Hydraulikaggregats 9 gepresst. Der Auslass 14 des Druckentlastungsventils 11 ist mit einem Überdachtopf 15 zur Abscheidung von Feststoff (z.B. Polyethylen) versehen. Die Verbindungsleitungen 8, 12 weisen einen Innendurchmesser von 10 bis 80 mm, bevorzugt 20 bis 50 mm, auf. Der Druck in diesem beträgt 100 bis 500 bar, bevorzugt 150 bis 250 bar.

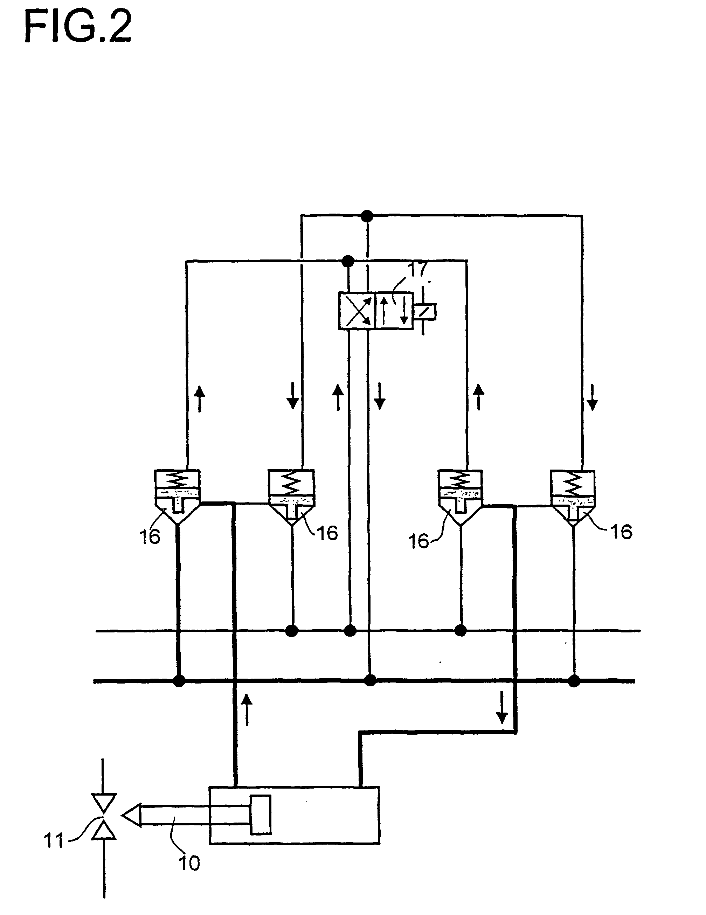

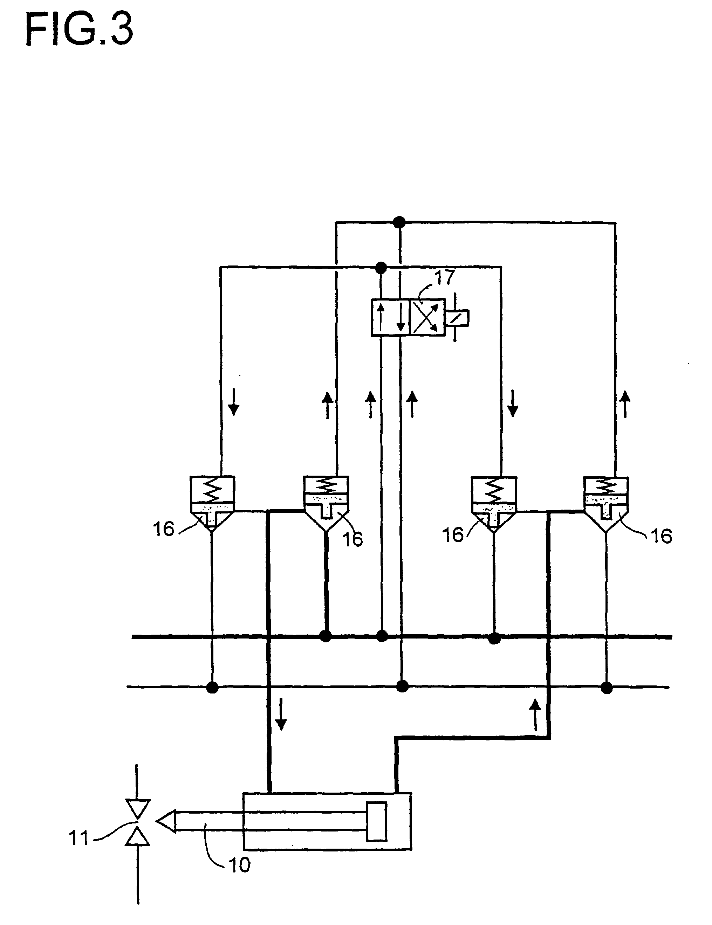

Fig. 2 und Fig. 3 zeigen eine speziell ausgebildete hydraulische Steuereinheit 5, die vier Schieberventile 16 mit Kugelsitzansteuerung und ein entsprechendes Kugelsitzventil 17 aufweist. Die aufgezeigten Strömungs- bzw. "Pressrichtungen" der Hydraulikflüssigkeit geben vor, ob das Druckentlastungsventil 11 durch die bewegliche Kolbenmasse 10 zugehalten bzw. geschlossen (Fig. 2) oder geöffnet bzw. aufgehalten (Fig. 3) wird. Fig. 2 gibt somit die normale Betriebsfahrweise und Fig. 3 die "Notstellung" schematisch wieder.

## Patentansprüche

1. Vorrichtung enthaltend
a) einen Hochdruckreaktor (1) aufweisend ein Innenvolumen von 0,4 bis 20 m³ und einen Innendruck von 1000 bis 5000 bar,
b) Messeinrichtungen (2, 3) zur Bestimmung von Druck und/oder Temperatur in dem Hochdruckreaktor (1),
c) eine elektronische Steuerung (4),
d) eine ein oder mehrere Ventile aufweisende hydraulische Steuereinheit (5),
e) ein Hydraulikaggregat (9), enthaltend einen eine bewegliche Kolbenmasse (10) aufweisenden Hydraulikzylinder und ein an dem Hochdruckreaktor (1) befindliches, durch den Hydraulikzylinder gesteuertes Druckentlastungsventil (11) und
f) für die Beförderung von Hydraulikflüssigkeit vorgesehene Verbindungsleitungen (8, 12) zwischen der hydraulischen Steuereinheit (5) und dem Hydraulikaggregat (9), wobei
bei Überschreitung einer vorgegebenen Temperatur oder eines vorgegebenen Drucks in dem Hochdruckreaktor (1) durch eine Messeinrichtung (2, 3) ein Signal an die elektronische Steuerung (4) übermittelt wird, welche darauf die Öffnung eines oder mehrerer Ventile der hydraulischen Steuereinheit (4) veranlasst, wodurch Hydraulikflüssigkeit durch ein oder mehrere Verbindungsleitungen (8, 12) in Richtung der beweglichen Kolbenmasse (10) des Hydraulikzylinders gepresst wird, die bewegliche Kolbenmasse (10) dadurch bewegt wird, wodurch das Druckentlastungsventil (11) geöffnet wird, wobei mindestens eine der Verbindungsleitungen (8, 12) im Durchschnitt einen Innendurchmesser von 10 bis 80 mm aufweist, diese mindestens eine Verbindungsleitung (8, 12) einen Innendruck von 100 bis 500 bar aufweist und die bewegliche Kolbenmasse (10) 10 bis 80 kg wiegt.

2. Vorrichtung nach Anspruch 1, **dadurch gekennzeichnet, dass** der Hochdruckreaktor (1) ein Innenvolumen von 1 bis 15 m³ aufweist.

3. Vorrichtung nach Anspruch 1 oder 2, **dadurch gekennzeichnet, dass** der Hochdruckreaktor (1) einen Innendruck von 2000 bis 3500 bar aufweist.

4. Vorrichtung nach einem der Ansprüche 1 bis 3, **dadurch gekennzeichnet, dass** mindestens eine der Verbindungsleitungen (8, 12), im Durchschnitt einen Innendurchmesser von 20 bis 50 mm aufweist.

5. Vorrichtung nach einem der Ansprüche 1 bis 4, **dadurch gekennzeichnet, dass** die mindestens eine Verbindungsleitung (8, 12) einen Innendruck von 150 bis 250 bar aufweist.

6. Vorrichtung nach einem der Ansprüche 1 bis 5, **dadurch gekennzeichnet, dass** die bewegliche Kolbenmasse (10) 15 bis 50 kg wiegt.

7. Vorrichtung nach einem der Ansprüche 1 bis 6, **dadurch gekennzeichnet, dass** eine Verbindungsleitung (12), durch die während des Öffnens des Druckentlastungsventils (11) Hydraulikflüssigkeit von dem Hydraulikaggregat (9) in Richtung der hydraulischen Steuereinheit (5) befördert wird, mit einem Drosselrückschlagventil (13) ausgestattet ist.

8. Vorrichtung nach einem der Ansprüche 1 bis 7, **dadurch gekennzeichnet, dass** ein oder mehrere Ventile der hydraulischen Steuereinheit (5) als Schieberventile (16) mit Kugelsitzansteuerung ausgebildet sind.

9. Vorrichtung nach einem der Ansprüche 1 bis 8, **dadurch gekennzeichnet, dass** zwei für die Beförderung von Hydraulikflüssigkeit vorgesehene Verbindungsleitungen (8, 12) zwischen der hydraulischen Steuereinheit (5) und dem Hydraulikaggregat (9) angeordnet sind.

10. Vorrichtung nach einem der Ansprüche 1 bis 9, **dadurch gekennzeichnet, dass** das Druckentlastungsventil (11) dadurch geöffnet wird, dass die bewegliche Kolbenmasse (10) entweder zum Druckentlastungsventil (11) hin- oder bevorzugt vom letzteren wegbewegt wird.

## Claims

1. Apparatus containing
.a) a high-pressure reactor (1) having an internal volume of from 0.4 to 20 m³ and an internal pressure of from 1000 to 5000 bar,
b) measurement devices (2, 3) for determining pressure and/or temperature in the high-pressure reactor (1),
c) an electronic control system (4),
d) a hydraulic control unit (5) having one or more valves,
e) a hydraulic system (9) containing a hydraulic cylinder having a movable piston mass (10), and a pressure-relief valve (11) located on the high-pressure reactor (1) and controlled by the hydraulic cylinder, and
f) connecting lines (8, 12) between the hydraulic control unit (5) and the hydraulic system (9) which are provided for conveying hydraulic fluid, where
if a prespecified temperature or a prespecified pressure is exceeded in the high-pressure reactor (1), a measurement device (2, 3) transmits a signal to the electronic control system (4), which then effects the opening of one or more valves of the hydraulic control unit (4), causing hydraulic fluid to be forced through one or more connecting lines (8, 12) in the direction of the movable piston mass (10) of the hydraulic cylinder, the movable piston mass (10) is moved thereby, causing the pressure-relief valve (11) to be opened, where at least one of the connecting lines (8, 12) has on average an internal diameter of from 10 to 80 mm, this at least one connecting line (8, 12) has an internal pressure of from 100 to 500 bar, and the movable piston mass (10) weighs from 10 to 80 kg.

2. Apparatus according to claim 1, **characterized in that** the high-pressure reactor (1) has an internal volume of from 1 to 15 m³.

3. Apparatus according to claim 1 or 2, **characterized in that** the high-pressure reactor (1) has an internal pressure of from 2000 to 3500 bar.

4. Apparatus according to one of claims 1 to 3, **characterized in that** at least one of the connecting lines (8, 12) has on average an internal diameter of from 20 to 50 mm.

5. Apparatus according to one of claims 1 to 4, **characterized in that** the at least one connecting line (8, 12) has an internal pressure of from 150 to 250 bar.

6. Apparatus according to one of claims 1 to 5, **characterized in that** the movable piston mass (10) weighs from 15 to 50 kg.

7. Apparatus according to one of claims 1 to 6, **characterized in that** a connecting line (12) through which hydraulic fluid is conveyed from the hydraulic system (9) in the direction of the hydraulic control unit (5) during the opening of the pressure-relief valve (11) is fitted with a one-way restrictor (13).

8. Apparatus according to one of claims 1 to 7, **characterized in that** one or more valves of the hydraulic control unit (5) are designed as sliding valves (16) with ball seat actuation.

9. Apparatus according to one of claims 1 to 8, **characterized in that** two connecting lines (8, 12) provided for conveying hydraulic fluid are arranged between the hydraulic control unit (5) and the hydraulic system (9).

10. Apparatus according to one of claims 1 to 9, **characterized in that** the pressure-relief valve (11) is opened by moving the movable piston mass (10) either toward or preferably away from the pressure-relief valve (11).

## Revendications

1. Dispositif comprenant :
a) un réacteur à haute pression (1) avec un volume intérieur de 0,4 à 20 m³ et une pression intérieure de 1000 à 5000 bars,
b) des dispositifs de mesure (2, 3) pour déterminer la pression et/ou la température dans le réacteur à haute pression (1),
c) une commande électronique (4),
d) une unité de commande hydraulique (5) comprenant une ou plusieurs vannes,
e) un ensemble hydraulique (9) comprenant un cylindre hydraulique avec une masse de piston mobile (10) et un clapet de décharge de pression (11) se trouvant sur le réacteur à haute pression (1) et commandé par le cylindre hydraulique et
f) des conduites de liaison (8, 12) entre l'unité de commande hydraulique (5) et l'ensemble hydraulique (9), qui sont prévues pour le transport du fluide hydraulique,
alors qu'en cas de dépassement d'une température prédéterminée ou d'une pression déterminée dans le réacteur à haute pression (1), un dispositif de mesure (2, 3) transmet un signal à la commande électronique (4), qui commande alors l'ouverture d'une ou de plusieurs vanne(s) de l'unité de commande hydraulique (4), en fonction de quoi du fluide hydraulique est poussé à travers une ou plusieurs conduite(s) de liaison (8, 12) en direction de la masse de piston mobile (10) du cylindre hydraulique en mettant en mouvement la masse de piston mobile (10) ce qui ouvre la vanne de décharge de pression (11), et alors qu'au moins une des conduites de liaison (8, 12) a en moyenne un diamètre intérieur de 10 à 80 mm, que cette au moins une conduite de liaison (8, 12) est soumise à une pression intérieure de 100 à 500 bars et que la masse de piston mobile (10) a un poids de 10 à 80 kg.

2. Dispositif selon la revendication 1, **caractérisé en ce que** le réacteur à haute pression (1) a un volume intérieur de 1 à 15 m³.

3. Dispositif selon la revendication 1 ou 2, **caractérisé en ce que** le réacteur à haute pression (1) est soumis à une pression intérieure de 2000 à 3500 bars.

4. Dispositif selon l'une quelconque des revendications 1 à 3, **caractérisé en ce qu'**au moins une des conduites de liaison (8, 12) a en moyenne un diamètre intérieur de 20 à 50 mm.

5. Dispositif selon l'une quelconque des revendications 1 à 4, **caractérisé en ce que** l'au moins une conduite de liaison (8, 12) est soumise à une pression intérieure de 150 à 250 bars.

6. Dispositif selon l'une quelconque des revendications 1 à 5, **caractérisé en ce que** la masse de piston mobile (10) a un poids situé entre 15 et 50 kg.

7. Dispositif selon l'une quelconque des revendications 1 à 6, **caractérisé en ce qu'**une conduite de liaison (12), par l'intermédiaire de laquelle du fluide hydraulique est transporté de l'ensemble hydraulique (9) en direction de l'unité de commande hydraulique (5) pendant l'ouverture de la vanne de décharge de pression (11), est munie d'un clapet anti-retour d'un élément d'étranglement (13).

8. Dispositif selon l'une quelconque des revendications 1 à 7, **caractérisé en ce qu'**une ou plusieurs vannes de l'unité de commande hydraulique (5) sont configurées comme vannes à tiroirs (16) avec une commande du siège sphérique.

9. Dispositif selon l'une quelconque des revendications 1 à 8, **caractérisé en ce que** deux conduites de liaison (8, 12) prévues pour le transport de fluide hydraulique sont disposées entre l'unité de commande hydraulique (5) et l'ensemble hydraulique (9).

10. Dispositif selon l'une quelconque des revendications 1 à 9, **caractérisé en ce que** le clapet de décharge de pression (11) est ouvert par le fait que la masse de piston mobile (10) est déplacée soit vers le clapet de décharge de pression (11) ou de préférence en s'éloignant de celui-ci.
